# EUROPEAN PATENT APPLICATION

(11) **EP 1 615 159 A1**
(43) Date of publication of application: **11.01.2006**
(21) Application number: 04714807.7
(22) Date of filing: 26.02.2004
(51) Int. Cl.: G06K 7/10

(54) **DIGITAL ASSISTANT FOR GENERATING ACCOUNTING ENTRIES USING A HANDHELD CHARACTER-ORIENTED SCANNER**

(30) Priority: 07.03.2003 ES 200300610
(71) Applicant: Candau Chacon, E-41120 Gelves (Sevilla) (ES)
(72) Inventor: Candau Chacon, E-41120 Gelves (Sevilla) (ES)
(74) Representative: Gil-Vega, Victor
(86) International application number: PCT/ES2004/000093
(87) International publication number: WO 2004/079635

(57) **Abstract**

The invention relates to a computer system which is designed to facilitate the creation of accounting entries in businesses. The inventive system comprises a handheld text scanner, which is similar to a marking pen, and a software application which interprets and corrects the data read by the scanner from accounting documents in order to produce the corresponding accounting entries. According to the invention, the user passes the scanner over the relevant data in each document (dates, amounts, name of supplier, etc.) and the device interprets the data read, corrects possible errors, validates said data and deduces additional information based on the first results.

## Description

The specification herein refers to an application for patent embodied on a device designed for the conveyance of creation of record accounting entries by companies obtained from paper documents.

Most companies are obliged to have an account record of their business activity. Currently, the accountants in these companies use a wide range of computer software in order to keep record of their accounting entries. Most part of this data have to be entered manually using the keyboard and, most often, the user must carry out a task first, coding information. All this work involves a physical and intellectual effort, and the user needs a rather advanced level of knowledge in order to implement the information contained in the document converting it into structured data for the accounting software. On the other hand, the user could make transcripting and coding mistakes when entering the data.

The state of the art in this field includes text capturing devices using pocket scanner. Even though theses devices are related to the present invention, they do not bring solution themselves in order to generate accounting entries in an automatic and guided way.

Consequently, the "Computerised wizard for the creation of accounting entries using character oriented pocket scanner" is made of a text pocket scanner, similar to a marker, and an application software that implements and corrects the information entered using the scanner from the accounting documents (invoices, payrolls, bank statements, etc.), in order to create the corresponding accounting entries. When the user passes the device object of the invention over significant information on each document in question (dates, amounts, name of a supplier, etc.), the system interprets the scanned information, makes corrections of possible mistakes, validates them and infers additional information based on previous results.

When using the device object of the invention, any user without accounting knowledge can create or maintain a major part of the accounting entries record just by passing a small scanner of the size of a marker over significant information on the document in question. Next, the system tells the user the order of the information to be scanned and notifies about the validity of the same by beeping a sound. Also, from the scanned data it infers other pieces of information that are significant for the creation of the accounting entries, as the subaccount code of a supplier or client (inferred after scanning his name or telephone number from the purchase invoice) or the VAT percentage used in a purchase operation (after scanning the taxable amount and the invoice total amount).

From the aforementioned advantages, the "Computerised wizard for the creation of accounting entries using character oriented pocket scanner" offers, regarding the state of the art, a device that improves productivity dramatically, corrects possible transcription mistakes and reduces the physical and intellectual effort in a significant way.

The "Computerised wizard for the creation of accounting entries using character oriented pocket scanner" is made of a character oriented pocket scanner transfering data in real time (no batch), an application software on a graphical interface and implemented to interpret the scanned information and generate the accounting entries, and a computer to which the scanner will be connected and where the application program will be run.

The device object of the invention imports automatically all possible data from the user's accounting application by means of templates of correlation fields, which make it easily adaptable to the wide range of applications there exist in the market.

Also, it allows the user to add complementary information in order to optimise the operation of the solution.

Depending on the type of accounting document that is going to be scanned (invoice, payroll, bank extract, etc.), the user is shown a template, which can be customised, so that he can enter the data contained in each document. In this template, the information that the system expects to be entered appears in different colour on the screen in order to show the user what area in the document should be scanned with the scanner.

Once the scanner has converted the scanned text, the application program extracts the specific piece of information from the string of characters using masks, pattern location, conversion algorithms and several other computer techniques. After isolating the useful data inside the string, it is converted into a standard format according to each piece of information. Next, several validations are carried out depending on the data in question (dates, TIN, amounts). Some data is used to infer information needed for the creation of the accounting entry (e.g., passing the scanner over the e-mail address printed on the invoice document, we could get the supplier's account code). As the user goes on storing information, the device beeps different sounds indicating him several possible actions:
1. The scanned piece of information has been interpreted correctly and we can move on to scan the next item.
2. The scan should be repeated. The system does not accept the data scanned from the document.
3. The user should take an action among those listed on the screen.

Once the information needed is filled in the template, the device generates the accounting entry and gets ready for processing a new document.

When finished, the user orders the system to transfer the entries to the accounting application. There, templates of correlation fields are also used with the intention of providing compatibility with the wide range of accounting applications there exist in the market.

Next, with the purpose of presenting an embodiment of the invention, a design is shown where it is represented in a functional way the embodiment of the disclosed invention.
- Design (1): Character oriented pocket scanner.
- Design (2): Template for purchase and sale invoices.
- Design (3): Operation chart by blocks.

In these designs, the numbered items are represented as it follows:
(1): Invoice number
(2): Date
(3): Supplier or client ID
(4): Amounts

From the drawings, it can be seen in a preferred embodiment a character oriented pocket scanner (design 1) model C-Pen 10 with USB-Port connection, a computer Pentium III-550 Mhz with a sound card and Windows 98, and an application software written in Visual Basic 6. The accounting application used for the delivery of the generated entries is Contaplus Elite (from "Grupo SP Editores").

Consequently, the device that is herein revealed allows the creation of purchase and sale entries from the information written on the invoice document by means of the scanner (design 1).

Using the form (design 2) shown on the screen by the application software (design 3), the user enters the data. To do so, he passes the scanner (design 1) over the information written on the invoice document (design 2) and draws it back when he is finished.

The device shows then in green colour over the computer screen the information that should be scanned from the document. The process is carried out following these steps:
1. *Invoice number (1)*. When entering the data, it goes on to the next section indicating it by beeping a sound.
*2. Date (2)*. The system extracts a valid date from the string of characters scanned by the scanner. If it cannot be found, it will be indicated to the user by a distinguishable sound. If everything is correct, it will go on to the next section and it will be indicated by a different sound.
*3*. *Supplier and client ID (3)*. The application is able to locate the account of a supplier or client from any piece of information that can make it searchable, e.g., the TIN, part of its name, a Web domain, a telephone number, etc. Optionally, the supplier can have one or several different expenses accounts associated to the general purchases account, with the purpose of providing an automatic allocation of the expense.
   The system informs the user by different sounds about an array of possible situations: if client or supplier is located, the system goes on to the amounts section; if a supplier has multiple expenses items, a specific item has to be selected on the screen; if client or supplier is not located, the scan should be repeated.
*4. Amounts (4).* The user will scan, using the scanner, two out of four possible total amounts in an invoice. That is: Taxable Amount, VAT, Equivalence Surcharge or Invoice Total. The system will carry out comparisons based on the intrinsic relationships among the scanned data in order to deduce the validity of the scans and infer the rest of the amounts and percentages used.

From that information, the system will create the accounting entries and store them as a file. Next, it will be at disposal of the accounting application through its import entries file.

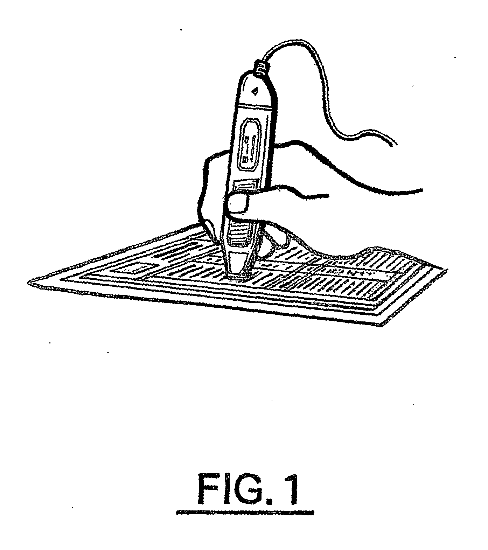

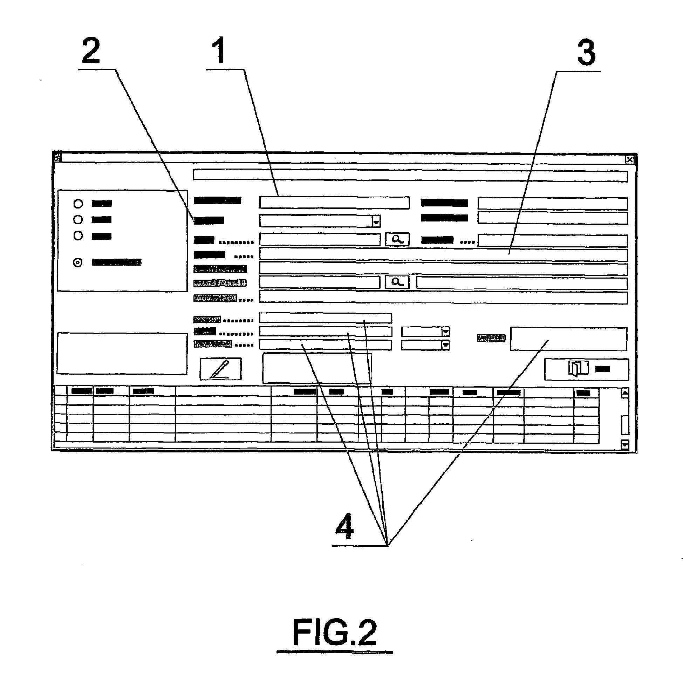

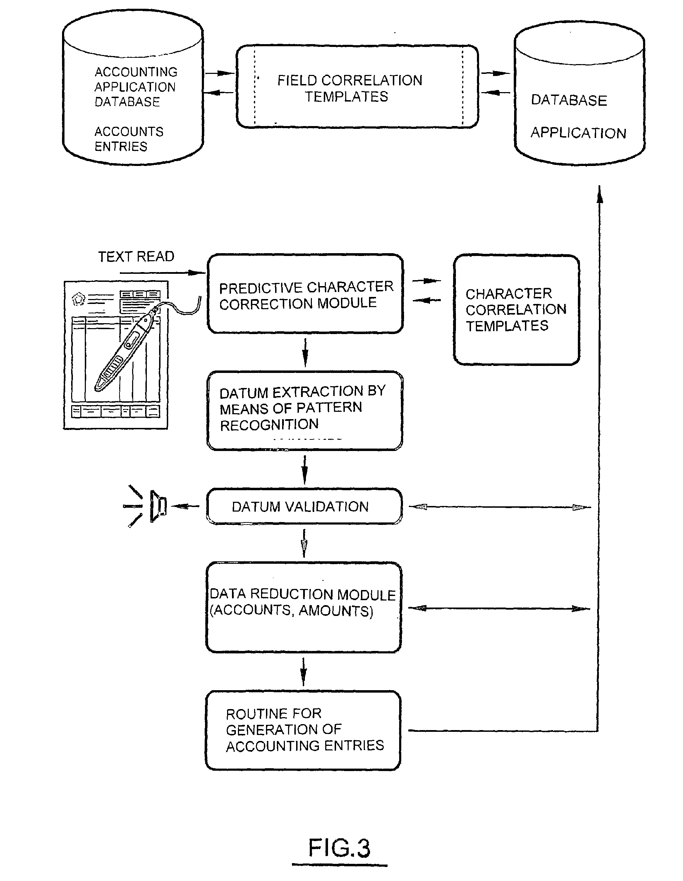

## Claims

1. Computerised wizard for the creation of accounting entries using character oriented pocket scanner **characterised in that** it is made of a pocket scanner (design 1) transfering data in real time (no batch), an application software on graphical interface and implemented in order to interpret the scanned information and generate the accounting entries, and a computer to which the scanner is connected and where the application program runs.

2. Computerised wizard for the creation of accounting entries using character oriented pocket scanner according to claim 1, **characterised in that** it provides different forms or templates (design 2) in order to enter the information contained in different types of accounting documents.

3. Computerised wizard for the creation of accounting entries using character oriented pocket scanner according to claim 1 and 2, **characterised in that** it imports automatically all possible data from the user's accounting application using templates of correlation fields.

4. Computerised wizard for the creation of accounting entries using character oriented pocket scanner according to claim 1, 2 and 3, **characterised in that** its forms (design 2) can be customised by the user.

5. Computerised wizard for the creation of accounting entries using character oriented pocket scanner according to claim 1, 2, 3 and 4, **characterised in that** its application software (design 3), depending on the type of accounting document that it is going to be processed (invoice, payroll, bank statement), shows the user a form (design 2) where he can enter the information contained in each document, appearing in different colour on the screen the information that the system expects to get in order to show the user what area in the document should be scanned with the scanner (design 1).

6. Computerised wizard for the creation of accounting entries using character oriented pocket scanner according to claim 1, 2, 3, 4 and 5, **characterised in that** the application software (design 3), once the scanner (design 1) has converted the scanned text, extracts the specific piece of information from the string of characters using masks, pattern location, conversion algorithms or other computer techniques and, after isolating the useful data inside the string, it is converted into a standard format according to each piece of information and it detects and corrects any mistake made by the scanner while scanning the data and even, in the case of amounts, it uses a double scan system that analyses the intrinsic relationships there exist among the scanned amounts in order to divert useful complementary information.

7. Computerised wizard for the creation of accounting entries using character oriented pocket scanner according to claim 1, 2, 3, 4, 5 and 6, **characterised in that** while the user scans the information, the device beeps different sounds indicating him any of these possible actions:
a) The scanned piece of information has been interpreted correctly and we can move on to scan the next item.
b) The scan should be repeated.
c) The user should take an action among those listed on the screen.

8. Computerised wizard for the creation of accounting entries using character oriented pocket scanner according to claim 1, 2, 3, 4, 5, 6 and 7, **characterised in that** once all the information needed has been scanned and the system has created the corresponding entries, the user will indicate the system to transfer the entry to the accounting application using templates of correlation fields that can be compatible with the wide range of accounting applications there exist in the market.

## Amended claims

### Amended claims under Art. 19.1 PCT

1. Computerised wizard for the creation of accounting entries using character oriented pocket scanner **characterised in that** it is made of a character oriented pocket scanner (design 1) transfering data in real time (no batch), an application software on graphical interface and implemented in order to interpret the information filled in the different forms and generate the accounting entries, and a computer to which the scanner is connected and where the application program runs.

2. Computerised wizard for the creation of accounting entries using character oriented pocket scanner according to claim 1, **characterised in that** its application software (design 3), depending on the type of accounting document that it is going to be processed (invoice, payroll, bank statement), shows the user a template (design 2) where he can enter the information contained in each document, appearing in different colour on the screen the information that the system expects to get in order to show the user what area in the document should be scanned with the scanner (design 1) and, once entered all the information, the transfer takes place using templates of correlation fields to the user's accounting application.

3. Computerised wizard for the creation of accounting entries using character oriented pocket scanner according to claim 1 and 2, **characterised in that** the application software (design 3), once the scanner (design 1) has converted the scanned text, extracts the specific piece of information from the string of characters using masks, pattern location, conversion algorithms or other computer techniques and, after isolating the useful data inside the string, it is converted into a standard format according to each piece of information and it detects and corrects any mistake made by the scanner (design 2) while scanning the data and, in the case of amounts, by means of a double scan system that analyses the intrinsic relationships there exist among the scanned amounts.

4. Computerised wizard for the creation of accounting entries using character oriented pocket scanner according to claim 1, 2 and 3, **characterised in that** as the user goes on storing information, the device beeps different sounds indicating him several possible actions:
a) The scanned piece of information has been interpreted correctly and we can move on to scan the next item.
b) The scan should be repeated.
c) The user should take an action among those listed on the screen.
